(19) Europäisches Patentamt
European Patent Office
Office européen des brevets

(11) **EP 3 370 205 A1**

(12) **DEMANDE DE BREVET EUROPEEN**

(43) Date de publication:
**05.09.2018 Bulletin 2018/36**

(51) Int Cl.:
*G06T 7/55* (2017.01)  *G06T 7/33* (2017.01)

(21) Numéro de dépôt: **18159666.9**

(22) Date de dépôt: **02.03.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **03.03.2017 FR 1751759**

(71) Demandeur: **Parrot Air Support**
**75010 Paris (FR)**

(72) Inventeurs:
• **PELLEGRINO, Giulio**
**75014 PARIS (FR)**
• **BOULANGER, Patrice**
**94110 ARCUEIL (FR)**

(74) Mandataire: **Lavoix**
**2, place d'Estienne d'Orves**
**75441 Paris Cedex 09 (FR)**

(54) **PROCÉDÉ ET DISPOSITIF ÉLECTRONIQUE DE DÉTERMINATION D'UN MODÈLE EN PERSPECTIVE D'UN OBJET, PROGRAMME D'ORDINATEUR ET APPAREIL ÉLECTRONIQUE D'AFFICHAGE ASSOCIÉS**

(57) Ce procédé de détermination d'un modèle en perspective d'un objet est mis en oeuvre par un dispositif électronique de détermination.

Il comprend les étapes suivantes :
- l'acquisition (100) de premières images d'un rayonnement de l'objet dans le spectre visible, les premières images acquises correspondant à différents angles de prise de vue de l'objet ;
- le calcul (110) d'un modèle en perspective de l'objet à partir des premières images acquises ;
- l'acquisition (120) de deuxièmes images d'un rayonnement infrarouge de l'objet, les deuxièmes images acquises correspondant à différents angles de prise de vue de l'objet ; et
- la transformation (130), à partir des deuxièmes images acquises, du modèle en perspective calculé en un modèle infrarouge en perspective de l'objet.

FIG.2

EP 3 370 205 A1

**Description**

La présente invention concerne un procédé de détermination d'un modèle en perspective d'un objet, le procédé étant mis en oeuvre par un dispositif électronique de détermination.

L'invention concerne également un programme d'ordinateur comportant des instructions logicielles qui, lorsqu'elles sont exécutées par un ordinateur, mettent en oeuvre un tel procédé de détermination.

L'invention concerne également un dispositif électronique de détermination d'un modèle en perspective d'un objet.

L'invention concerne également un appareil électronique d'affichage d'un modèle en perspective d'un objet, l'appareil comprenant un écran d'affichage, un tel dispositif électronique de détermination d'un modèle en perspective de l'objet, et un module d'affichage configuré pour afficher, sur l'écran d'affichage, chaque modèle en perspective déterminé par le dispositif électronique de détermination.

L'invention concerne le domaine de l'affichage sur un écran d'affichage de représentation(s) d'un objet, en particulier de modèles en perspective de l'objet. L'objet s'entend au sens large comme n'importe quel élément apte à être pris en image par un capteur d'image(s). L'objet est notamment un bâtiment, tel qu'un bâtiment apte à être survolé par un drone, et les images acquises sont alors des images prises par au moins un capteur d'images équipant le drone.

Par modèle en perspective, également appelé modèle en trois dimensions, ou modèle 3D, on entend une représentation de l'enveloppe extérieure, ou encore de la surface extérieure ou du contour extérieur, de l'objet. En outre, lorsqu'un tel modèle en perspective est affiché, l'utilisateur a généralement la possibilité de faire pivoter ce modèle autour de différents axes afin de voir le modèle de l'objet sous différents angles de vue.

On connait le calcul, de préférence par photogrammétrie, d'un modèle infrarouge en perspective de l'objet, à partir d'images infrarouges de l'objet sous différents angles de prise de vue, ces images infrarouges étant des images préalablement acquises d'un rayonnement infrarouge de l'objet.

Le modèle infrarouge en perspective, également appelé modèle thermique 3D, est alors affiché à l'écran, en permettant en outre à l'utilisateur de le faire pivoter autour de différents axes afin de le voir sous différents angles de vue.

Toutefois, la précision du calcul d'un tel modèle infrarouge en perspective est souvent insuffisante, et un tel modèle présente alors un intérêt limité pour l'utilisateur, des points caractéristiques de l'objet étant souvent difficiles à identifier sur le modèle lorsqu'il est affiché.

Le but de l'invention est alors de proposer un procédé de détermination, et un dispositif électronique de détermination associé, permettant d'offrir une plus grande précision pour le calcul du modèle infrarouge en perspective.

A cet effet, l'invention a pour objet un procédé de détermination d'un modèle en perspective d'un objet, le procédé étant mis en oeuvre par un dispositif électronique de détermination et comprenant les étapes suivantes :

- l'acquisition de premières images d'un rayonnement de l'objet dans le spectre visible, les premières images acquises correspondant à différents angles de prise de vue de l'objet ;
- le calcul d'un modèle en perspective de l'objet à partir des premières images acquises ;
- l'acquisition de deuxièmes images d'un rayonnement infrarouge de l'objet, les deuxièmes images acquises correspondant à différents angles de prise de vue de l'objet ;
- la transformation, à partir des deuxièmes images acquises, du modèle en perspective calculé en un modèle infrarouge en perspective de l'objet.

Avec le procédé de détermination selon l'invention, un modèle en perspective de l'objet est d'abord calculé à partir des premières images acquises, les premières images acquises étant des images d'un rayonnement de l'objet dans le spectre visible et correspondant à différents angles de prise de vue de l'objet. Ce calcul est par exemple effectué par photogrammétrie.

Puis, le modèle en perspective, calculé pour le spectre visible, est transformé en un modèle infrarouge en perspective de l'objet, à partir des deuxièmes images acquises, les deuxièmes images étant des images d'un rayonnement infrarouge de l'objet et correspondant à différents angles de prise de vue de l'objet.

Le fait de déterminer le modèle infrarouge 3D en partant d'un modèle 3D calculé pour le spectre visible, puis en le transformant, à partir d'images infrarouges acquises, en le modèle infrarouge 3D, plutôt que de directement calculer le modèle infrarouge 3D à partir des images infrarouges acquises, par exemple par photogrammétrie, permet alors d'améliorer la précision du modèle thermique 3D obtenu.

Suivant d'autres aspects avantageux de l'invention, le procédé de détermination comprend une ou plusieurs des caractéristiques suivantes, prises isolément ou suivant toutes les combinaisons techniquement possibles :

- les premières images acquises sont des images issues d'un premier capteur d'images et les deuxièmes images acquises sont des images issues d'un deuxième capteur d'images, les premier et deuxième capteurs d'images étant disposés dans des plans distincts ; et l'étape de transformation comporte le calcul d'une homographie entre chaque deuxième image acquise et chaque première image acquise correspondante ;

- les premières images acquises ont des premières dimensions et les deuxièmes images acquises ont des deuxièmes dimensions strictement inférieures aux premières dimensions ; et l'étape de transformation comporte la génération, à partir des deuxièmes images, de deuxièmes images auxiliaires ayant les premières dimensions ;
- l'étape de transformation comporte le codage de chaque deuxième image auxiliaire en une deuxième image codée respective, une température étant associée à chaque pixel de la deuxième image auxiliaire, et chaque pixel de la deuxième image codée respective ayant plusieurs valeurs associées, une moyenne desdites valeurs étant indépendante de ladite température ;
- l'étape de transformation comporte la génération d'un modèle intermédiaire en perspective, via une projection de chaque deuxième image codée sur un maillage associé au modèle en perspective calculé et en fonction de l'homographie calculée entre chaque deuxième image acquise et chaque première image acquise correspondante ;
- l'étape de transformation comporte la conversion du modèle intermédiaire en perspective en le modèle infrarouge en perspective, via le décodage des valeurs de chaque pixel du modèle intermédiaire pour obtenir la température associée audit pixel ; et
- l'objet est un bâtiment apte à être survolé par un drone, et les images acquises sont des images prises par au moins un capteur d'images équipant le drone.

L'invention a également pour objet un programme d'ordinateur comportant des instructions logicielles qui, lorsqu'elles sont exécutées par un ordinateur, mettent en oeuvre un procédé de détermination tel que défini ci-dessus.

L'invention a également pour objet un dispositif électronique de détermination d'un modèle en perspective d'un objet, le dispositif comprenant :

- un premier module d'acquisition configuré pour acquérir des premières images d'un rayonnement de l'objet dans le spectre visible, les premières images acquises correspondant à différents angles de prise de vue de l'objet ;
- un module de calcul configuré pour calculer un modèle en perspective de l'objet à partir des premières images acquises ;
- un deuxième module d'acquisition configuré pour acquérir des deuxièmes images d'un rayonnement infrarouge de l'objet, les deuxièmes images acquises correspondant à différents angles de prise de vue de l'objet ; et
- un module de transformation configuré pour transformer, à partir des deuxièmes images acquises, le modèle en perspective calculé en un modèle infrarouge en perspective de l'objet.

L'invention a également pour objet un appareil électronique d'affichage d'un modèle en perspective d'un objet, l'appareil comprenant un écran d'affichage, un dispositif électronique de détermination d'un modèle en perspective de l'objet, et un module d'affichage configuré pour afficher, sur l'écran d'affichage, chaque modèle en perspective déterminé par le dispositif électronique de détermination, le dispositif électronique de détermination étant tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un appareil électronique d'affichage selon l'invention, l'appareil comprenant un écran d'affichage et un dispositif électronique de détermination d'un modèle en perspective de l'objet, et un module d'affichage configuré pour afficher, sur l'écran d'affichage, chaque modèle en perspective déterminé par le dispositif électronique de détermination ;
- la figure 2 est un organigramme d'un procédé de détermination selon l'invention ;
- la figure 3 est une vue d'un modèle en perspective calculé pour le spectre visible, l'objet étant un bâtiment ; et
- la figure 4 est une vue d'un modèle infrarouge en perspective, obtenu par transformation du modèle en perspective de la figure 3.

Dans la suite de la description, l'expression « sensiblement égal à » s'entend comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

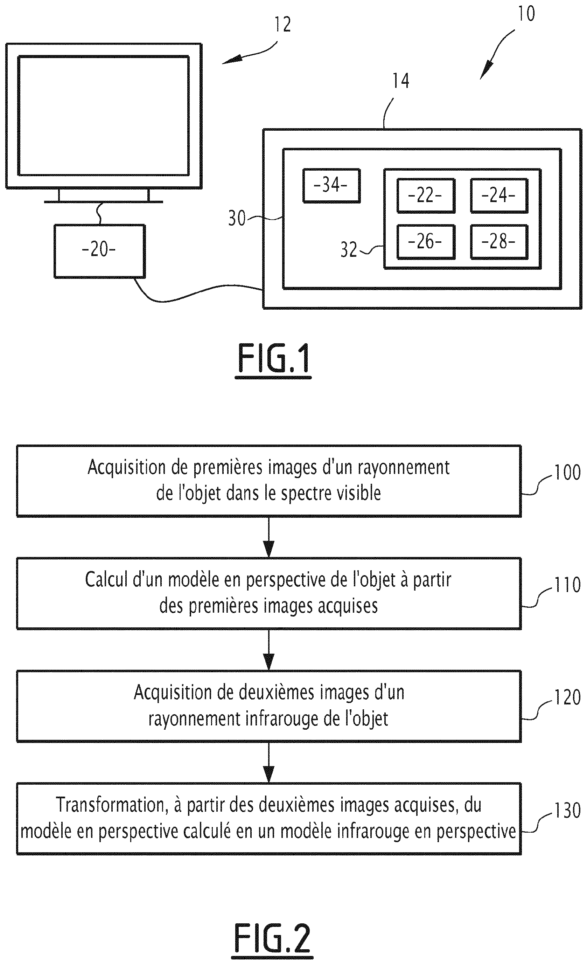

Sur la figure 1, un appareil électronique 10 d'affichage d'au moins une représentation d'un objet comprend un écran d'affichage 12 et un dispositif électronique 14 de détermination d'un modèle en perspective 16, 18 de l'objet, et un module d'affichage 20 configuré pour afficher, sur l'écran d'affichage, chaque modèle en perspective 16, 18, déterminé par le dispositif électronique de détermination 14.

L'objet est, par exemple, un bâtiment apte à être survolé par un drone, et les images acquises sont des images prises par au moins un capteur d'images équipant le drone.

L'écran d'affichage 12 est connu en soi.

Le dispositif électronique de détermination 14 est configuré pour déterminer au moins un modèle en perspective

16, 18 de l'objet. Le dispositif électronique de détermination 14 comprend un premier module d'acquisition 22 configuré pour acquérir des premières images d'un rayonnement de l'objet dans le spectre visible, les premières images acquises correspondant à différents angles de prise de vue de l'objet.

Le dispositif électronique de détermination 14 comprend un module de calcul 24 configuré pour calculer un modèle en perspective 16 de l'objet à partir des premières images acquises.

En complément, le dispositif électronique de détermination 14 comprend un deuxième module d'acquisition 26 configuré pour acquérir des deuxièmes images d'un rayonnement infrarouge de l'objet, les deuxièmes images acquises correspondant à différents angles de prise de vue de l'objet, et un module de transformation 28 configuré pour transformer, à partir des deuxièmes images acquises, le modèle en perspective calculé en un modèle infrarouge en perspective de l'objet.

Dans l'exemple de la figure 1, le dispositif électronique de détermination 14 comprend une unité de traitement d'informations 30, formée par exemple d'une mémoire 32 et d'un processeur 34 associé à la mémoire 32.

En complément facultatif, le dispositif électronique de détermination 14 est un serveur Web accessible via le réseau Internet.

Dans l'exemple de la figure 1, le premier module d'acquisition 22, le module de calcul 24, le deuxième module d'acquisition 26 et le module de transformation 28 sont réalisés chacun sous forme d'un logiciel exécutable par le processeur 34. La mémoire 32 de l'unité de traitement d'informations 30 est alors apte à stocker un premier logiciel d'acquisition configuré pour acquérir des premières images d'un rayonnement de l'objet dans le spectre visible, un logiciel de calcul configuré pour calculer un modèle en perspective 16 de l'objet à partir des premières images acquises, un deuxième logiciel d'acquisition configuré pour acquérir des deuxièmes images d'un rayonnement infrarouge de l'objet, et un logiciel de transformation configuré pour transformer, à partir des deuxièmes images acquises, le modèle en perspective 16 calculé en un modèle infrarouge en perspective 18 de l'objet. Le processeur 34 de l'unité de traitement d'informations 30 est alors apte à exécuter le premier logiciel d'acquisition, le logiciel de calcul, le deuxième logiciel d'acquisition et le logiciel de transformation.

En variante non représentée, le premier module d'acquisition 22, le module de calcul 24, le deuxième module d'acquisition 26 et le module de transformation 28 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Applications Specific Integrated Circuit*).

Le modèle en perspective 16 est calculé à partir des premières images acquises pour le rayonnement de l'objet dans le spectre visible, et est également appelé modèle visible en perspective 16. Le spectre visible pour le rayonnement de l'objet associé aux premières images acquises correspond, par exemple, à des longueurs d'onde comprises sensiblement entre 380 nm et 700 nm.

Le modèle infrarouge en perspective 18 est obtenu par transformation du modèle visible en perspective 16, à partir des deuxièmes images acquises du rayonnement infrarouge de l'objet. Le rayonnement infrarouge de l'objet correspond par exemple à des longueurs d'onde comprises sensiblement entre 700 nm et 1 mm.

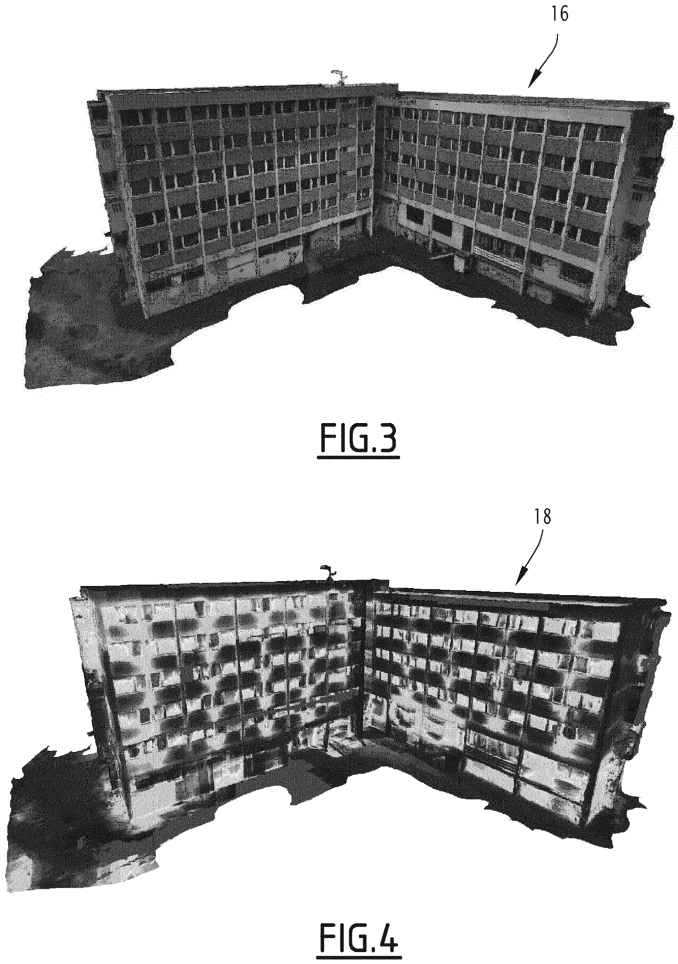

Les modèles en perspective 16, 18, sont également appelés modèles en trois dimensions, ou modèles 3D, à savoir modèle visible 3D 16 et modèle infrarouge 3D 18, et sont chacun une représentation de l'enveloppe extérieure, ou encore de la surface extérieure ou du contour extérieur, de l'objet, comme représenté sur la figure 3 pour le modèle visible 3D 16 et sur la figure 4 pour le modèle infrarouge 3D 18.

Autrement dit, l'homme du métier comprendra que dans le cas du modèle visible 3D 16, illustré sur la figure 3, l'enveloppe extérieure de l'objet est représentée pour le spectre visible et, dans le cas du modèle infrarouge 3D 18, illustré sur la figure 4, l'enveloppe extérieure de l'objet est représentée pour le spectre infrarouge.

Le module d'affichage 20 est configuré pour afficher, sur l'écran d'affichage 12, différentes informations, en particulier le modèle visible en perspective 16 et/ou le modèle infrarouge en perspective 18.

Le premier module d'acquisition 22 est configuré pour acquérir les premières images du rayonnement de l'objet dans le spectre visible de la part d'un premier capteur d'images, non représenté. Les premières images acquises, issues du premier capteur d'images, correspondent à différents angles de prise de vue de l'objet.

Le module de calcul 24 est configuré pour calculer le modèle visible en perspective 16 de l'objet à partir des premières images acquises, le calcul du modèle visible en perspective 16 étant connu en soi. Le calcul du modèle visible en perspective 16 est de préférence effectué par photogrammétrie.

Le deuxième module d'acquisition 26 est configuré pour acquérir les deuxièmes images du rayonnement de l'objet dans le spectre infrarouge de la part d'un deuxième capteur d'images, non représenté. Les deuxièmes images acquises, issues de deuxième capteur d'images, correspondent à différents angles de prise de vue de l'objet.

Le premier capteur d'images est, par exemple, un capteur d'images RGB pour la prise d'images RGB dans le domaine visible, et le deuxième capteur d'images est également appelé capteur infrarouge. Le premier capteur d'images pour la prise d'images dans le domaine visible et le deuxième capteur d'images pour la prise d'images infrarouges sont par exemple distincts et disposés dans des plans distincts, notamment lorsque ces capteurs sont embarqués sur un drone. Le premier capteur d'images et le deuxième capteur d'images présentent en outre généralement des tailles différentes.

Le module de transformation 28 est configuré pour transformer, à partir des deuxièmes images acquises, le modèle en perspective calculé 16 en le modèle infrarouge en perspective 18, c'est-à-dire pour transformer le modèle visible en perspective 16 en le modèle infrarouge en perspective 18.

Lorsque les premier et deuxième capteurs d'images sont disposés dans des plans distincts, le module de transformation 28 est configuré pour calculer une homographie entre chaque deuxième image acquise et chaque première image acquise correspondante.

Pour le calcul de ladite homographie, le module de transformation 28 est d'abord configuré pour déterminer des correspondances entre les premières et deuxièmes images, par exemple en appliquant un filtre de Canny à la deuxième image, i.e. l'image infrarouge, et à la première image correspondante. Ce filtre de Canny permet de détecter les contours des principaux éléments de l'objet dans la deuxième image et dans la première image correspondante.

Pour le calcul de ladite homographie, le module de transformation 28 est ensuite configuré pour appliquer un filtre de type flou gaussien (de l'anglais *blur*) aux premières et deuxièmes images obtenues après détermination de correspondances, par exemple après application du filtre de Canny. L'application du filtre de type flou gaussien permet d'élargir les traits des contours.

Pour le calcul de ladite homographie, le module de transformation 28 est enfin configuré pour mettre en oeuvre un algorithme génétique pour calculer une matrice d'ajustement du positionnement, également appelé matrice de transformation, entre la deuxième image et la première image. L'algorithme génétique consiste par exemple à choisir un gène, tel qu'une abscisse, une ordonnée, un angle, une échelle, un trapèze, puis à appliquer l'homographie associée au gène à la deuxième image obtenue après application du filtre de type flou gaussien, et à superposer l'image infrarouge résultant de cette homographie à la première image obtenue après application du filtre de type flou gaussien. Pour la première itération, le gène est par exemple pris au hasard. L'algorithme génétique consiste à déterminer le meilleur gène. L'algorithme génétique consiste à calculer la somme des intersections entre l'image infrarouge résultant de cette homographie et la première image, et enfin à sélectionner le gène pour lequel la somme desdites intersections est maximale. La transformation à appliquer à la deuxième image pour la superposer à la première image est alors la transformation résultant de l'homographie associée au gène sélectionné.

Lorsque les premières images acquises ont des premières dimensions et les deuxièmes images acquises ont des deuxièmes dimensions strictement inférieures aux premières dimensions, le module de transformation 28 est en outre configuré pour générer, à partir des deuxièmes images acquises, des deuxièmes images auxiliaires ayant les premières dimensions. A cet effet, le module de transformation 28 est, par exemple, configuré pour superposer chaque deuxième image acquise sur une couche prédéfinie, également appelée calque, ladite couche ayant les premières dimensions. La couche prédéfinie est par exemple de couleur grise.

Le module de transformation 28 est configuré pour coder chaque deuxième image auxiliaire en une deuxième image codée respective, une température $\alpha$ étant associée à chaque pixel de la deuxième image auxiliaire, et chaque pixel de la deuxième image codée respective ayant plusieurs valeurs associées $x_1$, $x_2$, $x_3$, une moyenne desdites valeurs $x_1$, $x_2$, $x_3$ étant indépendante de ladite température $\alpha$. Le nombre de valeurs résultant du codage est, par exemple, égal à 3, et les valeurs codées vérifient par exemple les équations suivantes :

$$x_1 = \frac{V_{max}}{2} \times \left[1 + \cos(\alpha)\right] \qquad (1)$$

$$x_2 = \frac{V_{max}}{2} \times \left[1 + \cos(\alpha + 120°)\right] \qquad (2)$$

$$x_3 = \frac{V_{max}}{2} \times \left[1 + \cos(\alpha + 240°)\right] \qquad (3)$$

où $x_1$, $x_2$, $x_3$ désignent les valeurs codées,
$V_{max}$ représente la valeur maximale en niveau de gris pour une échelle en niveau de gris associée à chaque deuxième image codée, et
$\alpha$ représente la température du pixel correspondant dans la deuxième image auxiliaire, générée à partir de l'image infrarouge.

La température $\alpha$ est de préférence une température normalisée, de valeur positive, sensiblement comprise entre 0° et 330°.

Le module de transformation 28 est configuré pour générer ensuite un modèle intermédiaire en perspective, via une projection de chaque deuxième image codée sur un maillage associé au modèle visible en perspective 16 et en fonction de l'homographie calculée entre chaque deuxième image acquise et chaque première image acquise correspondante. La projection de chaque deuxième image codée sur le maillage associé au modèle visible en perspective 16 est connue en soi.

Le module de transformation 28 est enfin configuré pour convertir le modèle intermédiaire en perspective en le modèle infrarouge en perspective, via le décodage des valeurs de chaque pixel du modèle intermédiaire pour obtenir la température associée audit pixel.

Pour le décodage des valeurs de chaque pixel du modèle intermédiaire, le module de transformation 28 est configuré pour mesurer les différentes valeurs associées à chaque pixel du modèle intermédiaire, les valeurs mesurées étant notées $y_1$, $y_2$, $y_3$. L'homme du métier comprendra que le nombre de valeurs associées à chaque pixel du modèle intermédiaire est égal au nombre de valeurs $x_1$, $x_2$, $x_3$ résultant du codage, et est par exemple égal à 3.

D'après l'exemple du codage des équations (1) à (3), les valeurs mesurées $y_1$, $y_2$, $y_3$ vérifient, aux erreurs de mesure près, les équations suivantes :

$$y_1 = A + B \times \cos(\alpha) \tag{4}$$

$$y_2 = A + B \times \cos(\alpha + 120°) \tag{5}$$

$$y_3 = A + B \times \cos(\alpha + 240°) \tag{6}$$

où A et B sont des coefficients constants.

Le module de transformation 28 est alors configuré pour calculer une moyenne M des valeurs mesurées $y_1$, $y_2$, $y_3$, afin de retrouver le coefficient B. La moyenne M est, par exemple, une moyenne arithmétique, et vérifie alors l'équation suivante :

$$M = \frac{y_1 + y_2 + y_3}{3} \tag{7}$$

Afin de retrouver le coefficient A, le module de transformation 28 est ensuite configuré pour calculer la valeur N suivant l'équation :

$$N = \sqrt{\frac{2}{3} \times \left( \sum_{i=1}^{3} (y_i - M)^2 \right)} \tag{8}$$

Afin de retrouver la température $\alpha$, le module de transformation 28 est ensuite configuré pour calculer les valeurs P et Q suivant l'équation :

$$P = \prod_{i=1}^{3} \left( \frac{y_i - M}{N} \right) \tag{9}$$

$$Q = \frac{Arc\cos(4 \times P)}{3} \tag{10}$$

La valeur Q est alors sensiblement égale à la température $\alpha$, à modulo $\pi/3$ radians près, la valeur Q étant comprise entre 0 et $\pi/3$ radians, i.e. entre 0° et 60°, alors que la température $\alpha$ est comprise entre 0° et 330°, et donc incluse dans l'intervalle [0°, 360°].

Le module de transformation 28 est alors configuré pour déterminer la température $\alpha$, à partir de la valeur Q et des valeurs mesurées $y_1$, $y_2$, $y_3$, le signe de la différence de toutes les combinaisons de valeurs $y_1$, $y_2$, $y_3$ permettant de déterminer dans quel secteur angulaire est comprise la température $\alpha$, parmi les secteurs [0°, 60°], [60°, 120°], [120°, 180°], [180°, 240°], [240°, 300°], [300°, 360°] exprimés en degrés.

En complément facultatif, le module de transformation 28 est configuré pour ignorer un pixel pour lequel la valeur N calculée à l'aide de l'équation (8) est inférieure à un seuil prédéfini, le seuil étant par exemple égal à 10.

Le fonctionnement de l'appareil électronique d'affichage 10 selon l'invention, et en particulier du dispositif électronique de détermination 14, va désormais être expliqué à l'aide de la figure 2 représentant un organigramme du procédé de détermination selon l'invention.

Lors d'une étape initiale 100, le dispositif électronique de détermination 14 commence par acquérir, via son premier module d'acquisition 22, les premières images du rayonnement de l'objet dans le spectre visible, les premières images acquises correspondant à différents angles de prise de vue de l'objet.

Le dispositif électronique de détermination 14 calcule ensuite, lors de l'étape 110 et via son module de calcul 24, le modèle visible en perspective 16 de l'objet à partir des premières images acquises, de préférence par photogrammétrie.

Lors de l'étape 120, le dispositif électronique de détermination 14 acquiert, via son deuxième module d'acquisition 26, les deuxièmes images du rayonnement de l'objet dans le spectre infrarouge, les deuxièmes images acquises correspondant à différents angles de prise de vue de l'objet.

Le dispositif électronique de détermination 14 transforme alors, selon l'invention et lors de l'étape 130, le modèle visible en perspective 16 calculé en le modèle infrarouge en perspective 18, à partir des deuxièmes images acquises.

Pour cette transformation, lorsque les premier et deuxième capteurs d'images sont disposés dans des plans distincts, le module de transformation 28 calcule, dans un premier temps, l'homographie entre chaque deuxième image acquise et chaque première image acquise correspondante.

Ensuite, lorsque les deuxièmes dimensions des deuxièmes images acquises sont strictement inférieures aux premières dimensions des premières images acquises, le module de transformation 28 génère les deuxièmes images auxiliaires ayant les premières dimensions, à partir des deuxièmes images acquises, par exemple par superposition de chaque deuxième image acquise sur un calque gris.

Le module de transformation 28 code alors chaque deuxième image auxiliaire en la deuxième image codée respective, les valeurs associées $x_1$, $x_2$, $x_3$ à chaque pixel de la deuxième image codée étant par exemple calculées à l'aide des équations (1) à (3).

Le module de transformation 28 génère ensuite le modèle intermédiaire en perspective, via la projection de chaque deuxième image codée sur le maillage associé au modèle visible en perspective 16 et en fonction, le cas échéant, de l'homographie calculée entre chaque deuxième image acquise et chaque première image acquise correspondante.

Le module de transformation 28 convertit enfin le modèle intermédiaire en perspective en le modèle infrarouge en perspective 18, via le décodage à l'aide des équations (7) à (10) des valeurs $y_1$, $y_2$, $y_3$ de chaque pixel du modèle intermédiaire pour obtenir la température $\alpha$ associée audit pixel.

La température $\alpha$ ainsi obtenue pour ledit pixel permet de déterminer la couleur ou le niveau de gris de chaque pixel du modèle infrarouge en perspective 18 pour l'affichage, sur l'écran 12 et via le module d'affichage 20, dudit modèle infrarouge en perspective 18, ceci en fonction d'une échelle prédéfinie couleur - température ou niveau de gris - température.

En complément facultatif, le module de transformation 28 ignore un pixel lorsque la valeur N calculée pour ledit pixel est inférieure au seuil prédéfini, le pixel du modèle intermédiaire n'étant alors pas considéré comme valide.

Ainsi, en déterminant le modèle infrarouge en perspective 18 à partir du modèle en perspective 16 calculé pour le spectre visible, qui est ensuite transformé en le modèle infrarouge en perspective 18 à partir des images infrarouges acquises, plutôt que de directement calculer le modèle infrarouge à partir des images infrarouges acquises comme cela est fait avec le procédé de l'état technique, on améliore significativement la précision et le rendu du modèle thermique 3D obtenu.

En outre, le calcul de l'homographie entre chaque deuxième image acquise et chaque première image acquise correspondante permet de prendre en compte le cas où les premier et deuxième capteurs d'images sont disposés dans des plans distincts, ce qui est souvent le cas sur un drone.

La génération des deuxièmes images auxiliaires ayant les premières dimensions, ceci à partir des deuxièmes images acquises, par exemple par superposition de chaque deuxième image acquise sur un calque gris ayant les premières dimensions, permet de s'affranchir de la différence de dimensions entre les premières et deuxièmes images acquises, le deuxième capteur pour le spectre infrarouge étant généralement de taille inférieure à celle du premier capteur pour le spectre visible.

Le codage de chaque deuxième image auxiliaire en la deuxième image codée respective, préalablement à la projection de chaque deuxième image codée sur le maillage associé au modèle en perspective 16 calculé, permet alors de conserver l'information liée à la température $\alpha$ associée à chaque pixel de la deuxième image auxiliaire. L'information de température associée à chaque image infrarouge acquise initialement est donc conservée, la moyenne des valeurs

$x_1$, $x_2$, $x_3$ associées à chaque pixel de la deuxième image codée respective étant en effet indépendante de ladite température $\alpha$.

La conversion du modèle intermédiaire en le modèle infrarouge 18, via le décodage des valeurs $y_1$, $y_2$, $y_3$ de chaque pixel du modèle intermédiaire permet alors de retrouver la température $\alpha$ pour chaque pixel du modèle infrarouge 18, et ainsi de définir avec quelle couleur, voire avec quel niveau de gris, chaque pixel du modèle infrarouge en perspective 18 doit être affiché.

On conçoit ainsi que le procédé de détermination et le dispositif électronique de détermination 14 permettent d'offrir une plus grande précision pour le calcul du modèle infrarouge en perspective 18, celui-ci ayant ainsi un meilleur rendu.

## Revendications

1. Procédé de détermination d'un modèle en perspective (16, 18) d'un objet, le procédé étant mis en oeuvre par un dispositif électronique de détermination (14) et comprenant les étapes suivantes :

   - l'acquisition (100) de premières images d'un rayonnement de l'objet dans le spectre visible, les premières images acquises correspondant à différents angles de prise de vue de l'objet ;
   - le calcul (110) d'un modèle en perspective (16) de l'objet à partir des premières images acquises ;
   - l'acquisition (120) de deuxièmes images d'un rayonnement infrarouge de l'objet, les deuxièmes images acquises correspondant à différents angles de prise de vue de l'objet ; et
   - la transformation (130), à partir des deuxièmes images acquises, du modèle en perspective calculé (16) en un modèle infrarouge en perspective (18) de l'objet.

2. Procédé selon la revendication 1, dans lequel les premières images acquises sont des images issues d'un premier capteur d'images et les deuxièmes images acquises sont des images issues d'un deuxième capteur d'images, les premier et deuxième capteurs d'images étant disposés dans des plans distincts, et
   dans lequel l'étape de transformation (130) comporte le calcul d'une homographie entre chaque deuxième image acquise et chaque première image acquise correspondante.

3. Procédé selon la revendication 1 ou 2, dans lequel les premières images acquises ont des premières dimensions et les deuxièmes images acquises ont des deuxièmes dimensions strictement inférieures aux premières dimensions, et
   dans lequel l'étape de transformation (130) comporte la génération, à partir des deuxièmes images, de deuxièmes images auxiliaires ayant les premières dimensions.

4. Procédé selon la revendication 3, dans lequel l'étape de transformation (130) comporte le codage de chaque deuxième image auxiliaire en une deuxième image codée respective, une température ($\alpha$) étant associée à chaque pixel de la deuxième image auxiliaire, et chaque pixel de la deuxième image codée respective ayant plusieurs valeurs associées ($x_1$, $x_2$, $x_3$), une moyenne desdites valeurs ($x_1$, $x_2$, $x_3$) étant indépendante de ladite température ($\alpha$).

5. Procédé selon les revendications 2 et 4, dans lequel l'étape de transformation (130) comporte la génération d'un modèle intermédiaire en perspective, via une projection de chaque deuxième image codée sur un maillage associé au modèle en perspective calculé et en fonction de l'homographie calculée entre chaque deuxième image acquise et chaque première image acquise correspondante.

6. Procédé selon la revendication 5, dans lequel l'étape de transformation (130) comporte la conversion du modèle intermédiaire en perspective en le modèle infrarouge en perspective, via le décodage des valeurs ($y_1$, $y_2$, $y_3$) de chaque pixel du modèle intermédiaire pour obtenir la température ($\alpha$) associée audit pixel.

7. Procédé selon l'une quelconque des revendications précédentes, dans lequel l'objet est un bâtiment apte à être survolé par un drone, et les images acquises sont des images prises par au moins un capteur d'images équipant le drone.

8. Programme d'ordinateur comportant des instructions logicielles qui, lorsqu'elles sont exécutées par un ordinateur, mettent en oeuvre un procédé selon l'une quelconque des revendications précédentes.

9. Dispositif électronique (14) de détermination d'un modèle en perspective (16,18) d'un objet, le dispositif comprenant :

- un premier module d'acquisition (22) configuré pour acquérir des premières images d'un rayonnement de l'objet dans le spectre visible, les premières images acquises correspondant à différents angles de prise de vue de l'objet ;
- un module de calcul (24) configuré pour calculer un modèle en perspective (16) de l'objet à partir des premières images acquises ;
- un deuxième module d'acquisition (26) configuré pour acquérir des deuxièmes images d'un rayonnement infrarouge de l'objet, les deuxièmes images acquises correspondant à différents angles de prise de vue de l'objet ; et
- un module de transformation (28) configuré pour transformer, à partir des deuxièmes images acquises, le modèle en perspective calculé (16) en un modèle infrarouge en perspective (18) de l'objet.

**10.** Appareil électronique (10) d'affichage d'un modèle en perspective (16, 18) d'un objet, l'appareil (10) comprenant :

- un écran d'affichage (12) ;
- un dispositif électronique (14) de détermination d'un modèle en perspective (16, 18) de l'objet ; et
un module d'affichage (20) configuré pour afficher, sur l'écran d'affichage (12), chaque modèle en perspective (16, 18) déterminé par le dispositif électronique de détermination (14) ;
le dispositif électronique de détermination (14) étant selon la revendication 9.

12

10

14

30

-34-

-22- -24-

32 -26- -28-

-20-

FIG.1

Acquisition de premières images d'un rayonnement de l'objet dans le spectre visible | 100

Calcul d'un modèle en perspective de l'objet à partir des premières images acquises | 110

Acquisition de deuxièmes images d'un rayonnement infrarouge de l'objet | 120

Transformation, à partir des deuxièmes images acquises, du modèle en perspective calculé en un modèle infrarouge en perspective | 130

FIG.2

16

FIG.3

18

FIG.4

Europäisches
Patentamt

European
Patent Office

Office européen
des brevets

**RAPPORT DE RECHERCHE EUROPEENNE**

Numéro de la demande

EP 18 15 9666

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MARIO IVAN ALBA ET AL: "Mapping Infrared Data on Terrestrial Laser Scanning 3D Models of Buildings", REMOTE SENSING, vol. 3, no. 12, 25 août 2011 (2011-08-25), pages 1847-1870, XP055428278, DOI: 10.3390/rs3091847 | 1-3,5-10 | INV. G06T7/55 G06T7/33 |
| Y | * abrégé; figures 2, 3, 5, 8, 9 * * "3D Modeling Techniques: Photogrammetry and Terrestrial Laser Scanning"; page 1854 - page 1855 * * "Integration of IR Images and 3D Models of Buildings"; page 1849 * * "Relative Orientation of the 'Bi-camera' System"; page 1859 * | 4 | |
| Y | LAGÜELA S ET AL: "Automation of thermographic 3D modelling through image fusion and image matching techniques", AUTOMATION IN CONSTRUCTION, ELSEVIER, AMSTERDAM, NL, vol. 27, 9 mai 2012 (2012-05-09), pages 24-31, XP028401395, ISSN: 0926-5805, DOI: 10.1016/J.AUTCON.2012.05.011 [extrait le 2012-05-15] * le document en entier * * page 24, colonne de droite; figure 7 * | 4 | DOMAINES TECHNIQUES RECHERCHES (IPC) G06T |

-----

-----

-/--

Le présent rapport a été établi pour toutes les revendications

| Lieu de la recherche | Date d'achèvement de la recherche | Examinateur |
|---|---|---|
| Munich | 24 avril 2018 | Rodes Arnau, Isabel |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 18 15 9666

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | KOPPÁNY MÁTHÉ ET AL: "Vision and Control for UAVs: A Survey of General Methods andof Inexpensive Platforms for Infrastructure Inspection", SENSORS, vol. 15, no. 7, 25 juin 2015 (2015-06-25), pages 14887-14916, XP055428283, CH ISSN: 1424-8220, DOI: 10.3390/s150714887 * le document en entier * * "UAVs for Infrastructure Inspection Applications"; page 14900 - page 14901 * ----- | 7 | |

| | | | DOMAINES TECHNIQUES RECHERCHES (IPC) |
|---|---|---|---|

Le présent rapport a été établi pour toutes les revendications

| Lieu de la recherche | Date d'achèvement de la recherche | Examinateur |
|---|---|---|
| Munich | 24 avril 2018 | Rodes Arnau, Isabel |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

   ........................................................................
& : membre de la même famille, document correspondant

EPO FORM 1503 03.82 (P04C02)

page 2 de 2